# EUROPEAN PATENT APPLICATION

(11) **EP 1 887 678 A2**
(43) Date of publication of application: **13.02.2008**
(21) Application number: 07112709.6
(22) Date of filing: 18.07.2007
(51) Int. Cl.: H02K 37/20, H02K 1/17

(54) **Hybrid stepper motor**

(30) Priority: 07.08.2006 US 500166
(71) Applicant: KOLLMORGEN CORPORATION, Radford, VA 24141 (US)
(72) Inventor: Trago, Bradley, Blacksburg, VA 24060 (US); Rittmeyer, Gregory, Winnebago, IL 61088 (US); Darmin, Mohd. Fadil Bin, 570444, Singapore (SG); Geok, Sheila Aw Chiew, 551236, Singapore (SG); Chee, Eric Chia Eng, 529774, Singapore (SG)
(74) Representative: Gill, David Alan

(57) **Abstract**

A hybrid stepper motor includes a stator having a number of poles. Teeth are formed on the stator poles and separated from each other by slots. A magnet is inserted in the slots to a predetermined depth from a top surface of the stator teeth. The motor further includes a rotor that is provided coaxial with the stator. Teeth are also formed on the rotor opposite the stator teeth. The rotor teeth enable the rotor to be rotated relative to the stator in cooperation with the stator teeth.

## Description

The present invention relates to motors, and in particular, to a magnetically-assisted hybrid stepper motor.

Generally, a hybrid stepping or hybrid stepper motor includes a rotor with outwardly-projecting, peripherally-spaced rotor teeth which interact with inwardly-projecting peripherally-spaced stator teeth. The stator teeth are formed or mounted on peripherally-spaced inwardly-projecting stator poles such that the stator teeth on one pole may align with the opposing rotor teeth while the teeth on the adjacent pole are partially misaligned with the corresponding opposing rotor teeth. The stator teeth on the next peripherally-spaced pole align with the spaces or gaps between opposing rotor teeth. This rotor/stator tooth alignment condition is opposite on the corresponding opposite polarity segment.

It is known to insert permanent magnetic materials in the spaces between the stator teeth or the stator teeth and rotor teeth to increase efficiencies and torques of hybrid stepper motors. "Enhancing" a hybrid stepper motor in this manner provides improved torque density and torque linearity. The amount of improvement in torque production may be between 15 to 103% over an unenhanced hybrid stepper motor. The higher the peak current level, the greater the advantage achieved by enhancement.

Traditionally, enhanced hybrid stepper motors are manufactured with the magnets "flush" with the top surfaces of the teeth. While this provides the most performance, it is also difficult to manufacture because the rare earth magnet material used for the magnets is extremely hard, and must be carefully machined to avoid breakage. Moreover, the flushness of the magnets does not allow a corrosion protective coating to be applied on the magnets because the coating would not survive the machining process. A machining process is typically required on the stator in order to control the small air gaps in high performance hybrid stepper motors.

In the past hybrid stepper motors have been rated "off of a faceplate" i.e., not mounted to a heat sink, because of the poor torque linearity characteristics of the unenhanced hybrid stepper motors. In other words, torque produced by the motor did not have a linear relationship with the current applied to the motor. As a result, the manufacturers of traditional unenhanced hybrid stepper motors have not designed motors that leverage the heat dissipation capability of the motors. In the past, equipping an unenhanced hybrid stepper motor to dissipate more heat did not significantly improve the torque output because of the high degree of non-linearity (which in unenhancd motors results from the teeth saturating with magnetic flux). Inputting more current to produce more torque largely resulted in merely producing more heat.

The present invention seeks to provide for a hybrid stepper motor having advantages over known such hybrid stepper motors.

The present invention relates to a hybrid stepper motor including an aluminum housing, a stator provided in the housing and having a number of poles. Teeth are formed on each of the stator poles and separated from each other by slots. A magnet is inserted in the slots to a predetermined depth from the top surface of the stator teeth. The motor also includes a rotor which is provided coaxial with the stator. Teeth are also formed on the rotor opposite the stator teeth. The rotor teeth enable the rotor to be rotated relative to the stator in cooperation with the stator teeth. An aluminum endbell is attached to the housing on one side and configured to be attached to a faceplate on the other side.

The present invention is described further hereinafter, by way of example only, with reference to the accompanying drawings in which:
FIG. 1 is a perspective view of a hybrid stepper motor in accordance with one embodiment of the present invention
FIG. 2 is a sectional view of a hybrid stepper motor of FIG. 1, taken along line 2-2 shown in FIG. 1;
FIG. 3 is a section view of the hybrid stepper motor of FIG. 1, taken along line 3-3 shown in FIG. 2;
FIG. 4 is a view of a pole provided on a stator of FIG. 3;
FIG. 5 is a graph showing the torque ratio generated by a hybrid stepper motor having enhanced magnets that are flush with teeth surfaces and sub-flush with teeth surfaces; and
FIG. 6 is a graph showing the torque generated by a hybrid stepper motor constructed as both an enhanced and unenhanced motor, at various currents.

Broadly stated, the present invention is directed to a hybrid stepper motor which includes permanent magnets provided in the spaces between the teeth of the stator and/or rotor for enhancing the torque linearity and torque output of the motor. The magnets are set back or sub-flushed a predetermined distance from the surface of the teeth to allow reasonable performance gains to be achieved while at the same time achieving the manufacturing advantage of not having to machine magnets that are composed of extremely hard rare earth magnet material. Because the magnets are set back from the surface of the teeth, a corrosion protective coating can be applied on the surface of the magnets. The hybrid stepper motor is also provided in an aluminum housing for improved heat transfer to take advantage of the large improvement in torque linearity that such enhancement provides.

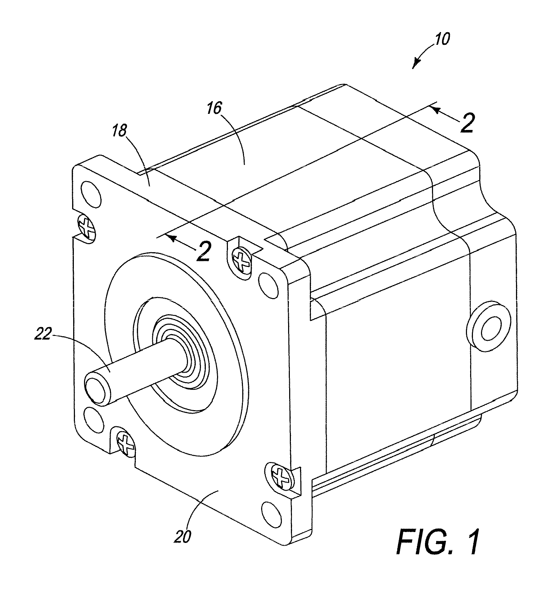

Turning now to FIGS. 1-3, a hybrid stepper motor 10 in accordance with one embodiment of the present invention includes a rotor 12 arranged to be mounted and rotated within a stator 14. The rotor 12 and the stator 14 are provided in a housing 16. The front end of the housing 16 is attached to one side of a front endbell 18, which on the opposite side is mounted to a faceplate 20. A shaft 22 is attached to the rotor 12 for rotation therewith and projects through the housing16 and the faceplate 20. The other end of the housing 16 is attached to a rear endbell 24. Bearings 26 mount the rotor 12 and the shaft 22 to be rotatable within the housing 16.

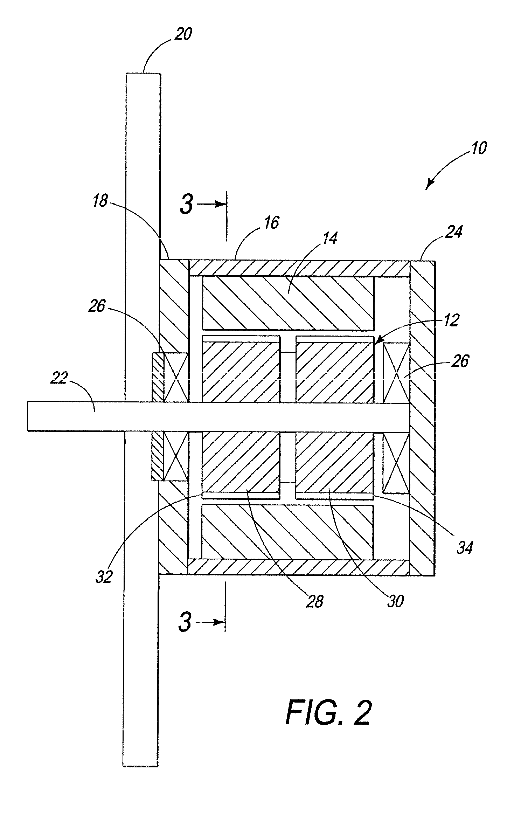

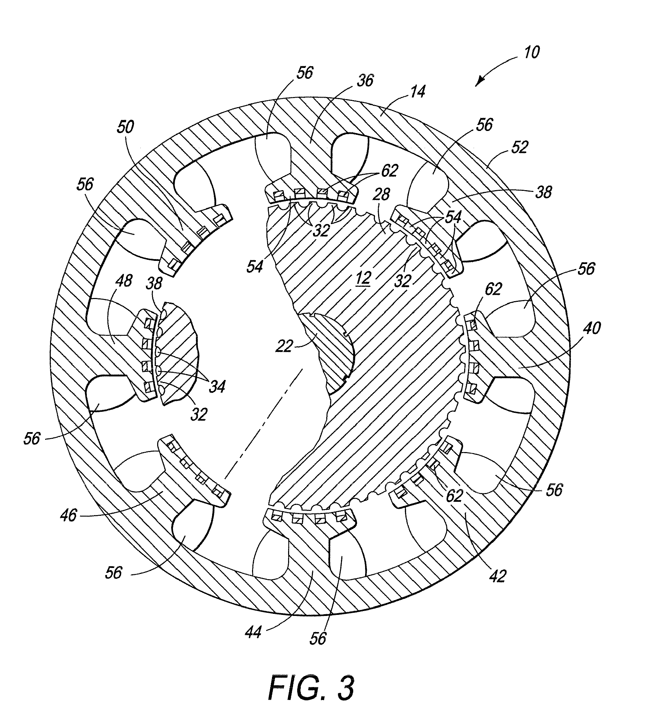

As shown in FIG. 2, the rotor 12 is composed of a front rotor segment 28 which is magnetized to exhibit a north polar magnetization and a rear rotor segment 30 which exhibits a south polar magnetization. A magnet 29 is provided between the front and rear rotor segments 28, 30. As shown in FIG. 3, the front rotor segment 28 carries fifty peripherally spaced teeth 32 projecting radially outward and spaced about the entire periphery of the rotor segment 28. The teeth 32 extend longitudinally along the axial direction of the rotor. The number of teeth 32 shown is only an example, and poles having different numbers of teeth may be utilized. The number of rotor teeth 32 is determined by the step angle to be achieved (e.g., 50 teeth x 2 phase x 2 states = 200 steps per revolution). In the example shown, the angular or peripheral tooth pitch, that is, the angular distance between like points on adjacent rotor teeth 32 is 7.2 degrees. This will result in the case of a 2 phase motor a full step angle of 1.8°.

The rear rotor segment 30 is identical to the front rotor segment 28 and carries outwardly directed peripherally spaced radial teeth 34. However, the segment 30 is mounted to the shaft 22 so that the rotor teeth 34 are angularly offset by one-half tooth pitch and so they appear, looking axially, midway between the teeth 32. This is shown most precisely in the left hand portion of the rotor in FIG. 3.

As shown in FIG. 3, eight angularly displaced poles 36, 38, 40, 42, 44, 46, 48 and 50, project inwardly from a common circumscribing stator portion 52 to form the stator 14. The poles 36-50 extend longitudinally along the entire axial dimension of the stator 14 beyond the rotor 10. Five stator pole teeth or stator teeth 54 form the inner radial ends of each pole 36-50. The stator pole teeth 54 are formed along an imaginary cylindrical surface coaxial with the rotor 12 and spaced slightly from the rotor teeth 32 and 34. In the embodiment shown, the stator pole teeth 54 are pitched at 7.2 degrees. Thus, the stator pole teeth 54 have the same pitch as the rotor teeth 32 and 34. It should be understood that while the rotor tooth pitch and the stator tooth pitch are the same in this embodiment, they may be different as determined by design choice of those skilled in the art.

The poles 36-50 and their respective teeth 54 are angularly arranged so that the teeth 54 on two opposite poles such as 36 and 44 can directly oppose the rotor teeth 32 on one pole shoe when the teeth 54 on poles 40 and 48 ninety degrees therefrom are completely out of alignment with the rotor teeth 32 on the same pole shoe. The teeth 32 on the remaining forty-five degree angularly oriented poles 38, 42, 46 and 50 are angularly arranged so that they are ninety electrical degrees and 270 electrical degrees out of phase with the angular alignment of the rotor teeth 32 of the same pole shoe, in the same position.

The stator pole teeth 54 extend longitudinally parallel to the rotor axis from one end of the rotor 12 to the other. Thus, when the teeth 54 on the pole 48 and 40 are 180 electrical degrees out of alignment with the teeth 32 of the front segment 28, they are completely aligned with the teeth 34 on the rear segment 30. At the same time the teeth 54 on the poles 36 and 44 are completely out of alignment with the teeth 34 on the rear segment 30. Stator coils 56 are used to magnetize the poles 36-50 in a sequence that causes rotation of the rotor.

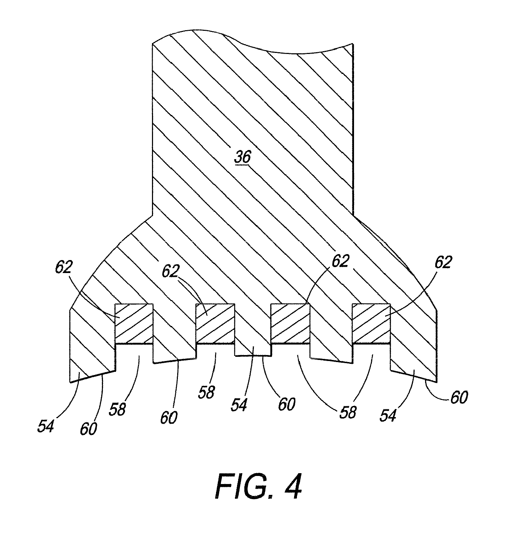

Turning now to FIG. 4, each of the stator pole teeth 54 are separated from each other by a slot 58, which has a generally rectangular bottom. The slots 58 are filled up to a predetermined depth from the surface 60 of the teeth 54 with a permanent magnet 62. In other words, the magnets 62 are not flush with the surface 60, but sub-flush. Preferably, the sub-flush should be from approximately from 0.001 to 0.020" from the surface 60 of the teeth 54 (the dimensions have been exaggerated in FIG. 4). The magnets 62 are approximately the longitudinal length of the rotor segments 28, 30 and has a rectangular cross section, so that they can be slid into the slots 58 after the stator bore is machined to its final dimension. The magnets 62 are held in place by the magnetic force generated by the magnets and adhesive applied between the magnets and the slots 58. The magnets 62 are formed preferably from a rare earth magnetic material such as, for example, samarium cobalt or neodymium iron boron.

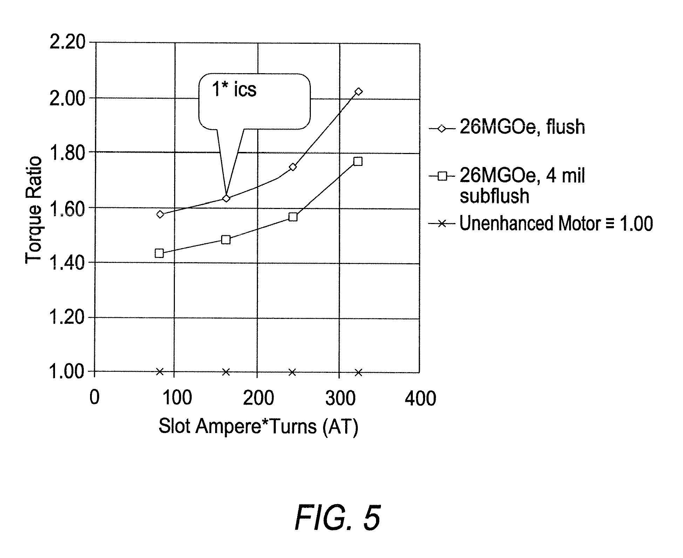

Referring to FIG. 5, the holding torque ratio is shown for a motor using a flush magnet with 26MGOe energy product (i.e., the product of B (Gauss) x H (Oersted)) and the same motor having magnets 62 sub-flushed at 0.004". At 1 ics (continuous current), the motor having flushed magnets delivered 65% more torque than the same motor with no enhancement (having a torque ratio of 1.00). By introducing a 0.004" sub-flush condition, the improvement is 48% over the same motor with no enhancement. While an introduction of a sub-flush does result in somewhat lower torque improvement than having the magnets flush with the surface of the teeth, this is compensated by the ease of manufacture, i.e., the magnets 62 do not have to be machined to be flush with the surface 60 of the teeth.

Referring back to FIG. 1, the housing 16 and the front and rear endbells 18, 24 of the hybrid stepper motor 10 are made of aluminum. The aluminum housing 16 and the rear endbell 24 conducts heat generated in the motor 10 into the front endbell 18, which then conducts the heat into the faceplate 18, which is also made of aluminum. In the preferred embodiment, the front endbell 18, the housing 16 and the rear endbell 24 are separate pieces. However, the housing 16 may be formed as a single integral piece with either the front endbell 18 or with the rear endbell 24. The use of aluminum for the housing 16, front endbell 18 and the faceplate 20 in this manner results in significant improvement in rated performance. This has traditionally not been done for hybrid stepper motors because of the very poor torque linearity beyond 1 * AT cont that known unenhanced hybrid stepper motors have displayed.

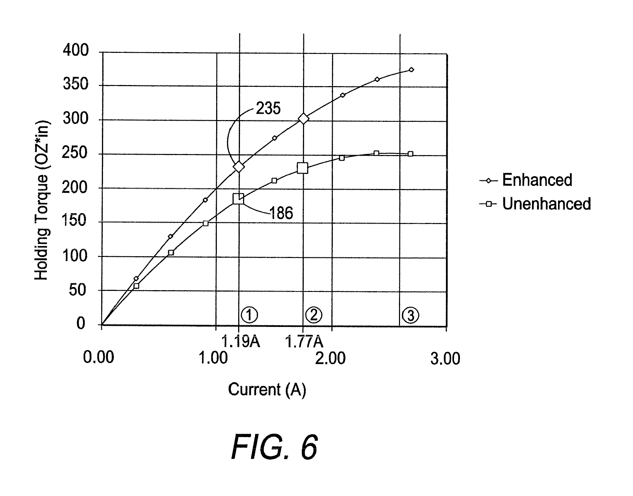

FIG. 6 illustrates, on a graph of torque vs. current, a comparison between an enhanced sub-flush hybrid stepper motor and an unenhanced hybrid stepper motor, with and without the aluminum housing 16. The current level is determined by the allowable temperature rise of the windings and the ambient temperature. At the current level shown by point 1 (1.19A), the holding torque of an un-enhanced motor and an enhanced motor, without the aluminum housing 16 and a faceplate 18 are shown to be 186 oz*in and 235 oz*in, respectively. Note the much improved linearity of the holding torque for the enhanced motor.

If the aluminum housing 16 is added and the hybrid stepper motor 10 is placed onto the faceplate 18, the resulting continuous current capability moves from point 1 to point 2 (1.77A). This makes the holding torque ratings change to 225 oz*in and 310 oz*in, respectively, for the un-enhanced and enhanced motors. In other words, if the 186 oz*in point is taken as the baseline, enhancing the hybrid stepper motor results in 235 oz*in or a 26% improvement. However, putting an aluminum housing 16 on the hybrid stepper motor and mounting it to a faceplate 18, and enhancing results in 310 oz*in or 67% improvement over the baseline. Putting an aluminum housing 16 on the un-enhanced motor and mounting the motor to a faceplate 18 results in mere 225 oz*in or a 21 % improvement over baseline.

Another benefit of the sub-flushed enhanced hybrid stepper motor 10 is to allow peak torques to be realized. It is common to use peak torques for the acceleration and deceleration portions of the velocity profiles commonly encountered by users of incremental motion. If one considers a reasonable peak current of 1.5* ics or even 2* ics is used for acceleration, FIG. 6 tells the story. The 1.5 X current level is shown on FIG. 6 as point 3. Note that the un-enhanced motor produces only a small amount of torque beyond the aluminum housed current level of point 2, the actual amount over baseline is 250 oz*in (34% over base line), while the enhanced motor would produce 370 oz*in (99% over baseline). Carry this a step further, the enhanced motor will continue to be able to produce additional useable torque beyond 2.65A, whereas the un-enhanced motor will not.

It should be understood that in the preferred embodiment, the magnet 29 used in the hybrid stepper motor is a rare earth magnet to take advantage of the peak torque capability and avoid demagnetization. However, use of other material such as Alnico is also contemplated.

While various embodiments of the present invention have been shown and described, it should be understood that other modifications, substitutions and alternatives are apparent to one of ordinary skill in the art. Such modifications, substitutions and alternatives can be made without departing from the spirit and scope of the invention, which should be determined from the appended claims.

Various features of the invention are set forth in the appended claims.

## Claims

1. A hybrid stepper motor comprising:
a stator having a plurality poles;
a plurality of stator teeth formed on each of said poles and separated from each other by a slot;
a magnet fixedly inserted in at least one of said slots; and
a rotor coaxial with said stator and having a plurality of rotor teeth opposite said stator teeth for enabling said rotor to be rotated relative to said stator in cooperation with said stator teeth.

2. A motor according to Claim 1, wherein said slots have a substantially rectangular shape.

3. A motor according to Claim 1 or 2, wherein said magnet is set to a predetermined sub-flushed depth from a top surface of said stator teeth

4. A motor according to Claim 3, wherein said magnet is sub-flushed to a depth of 0.001" to 0.020" from said top surface of said stator teeth.

5. A motor according to any one or more of the preceding claims, wherein said magnet comprises a rare earth magnetic material.

6. A motor according to Claim 5, wherein said magnet comprises samarium cobalt or neodymium iron boron.

7. A motor according to any one or more of the preceding claims, further comprising:
an aluminum housing in which said stator is provided; and
an endbell attached to said housing on one side and configured to be attached to a faceplate on the other side.

8. A motor according to Claim 7, wherein said endbell and/or said faceplate comprises aluminum.

9. A motor according to Claim 7 or 8, wherein said endbell and said housing form a single integral piece.
